# EUROPEAN PATENT APPLICATION

(11) **EP 3 381 294 A1**
(43) Date of publication of application: **03.10.2018**
(21) Application number: 16823061.3
(22) Date of filing: 25.11.2016
(51) Int. Cl.: A23F 5/14, A23P 20/10

(54) **COFFEE-DERIVED EDIBLE COMPONENT, EDIBLE PRODUCT SYSTEM COMPRISING SAID EDIBLE COMPONENT, AND USE OF SAID SYSTEM**

(30) Priority: 27.11.2015 PT 2015108987
(71) Applicant: Novadelta-Comércio e Industria de Cafés, S.A., 1950-041 Lisboa (PT)
(72) Inventor: NABEIRO, Rui Miguel, 7370-112 Campo Maior (PT)
(74) Representative: Ferreira Pinto, Francisca
(86) International application number: PCT/PT2016/050026
(87) International publication number: WO 2017/091095

(57) **Abstract**

The present invention discloses an edible component (1) that is derived from coffee and adapted for being part of edible products (2) presenting a portion of edible substance (3), whereby said edible component (1) is further adapted for providing at least one of a passive and active function to said portion of edible substance (2) and that includes at least one compound selected from the group that includes polysaccharides and chlorogenic acids extractable from coffee or a coffee derivate.

The present invention further discloses a system of edible products (2) presenting said edible component (1), as well as a use of said system of edible products (2).

## Description

### Field of the invention

The present invention refers to the field of edible components in edible products, in particular to the field of edible components including compounds that can be extracted from coffee, and to corresponding systems of edible products and uses thereof, in particular to the field of preparation of beverages, such as for example coffee based aromatic beverages and other beverages, that present edible components.

### Background of the invention

The prior art presents several solutions of edible products presenting edible components of different composition.

Coffee is an edible products that presents a significant number and diversity of organoleptic properties resulting from a particularly complex matrix of multiple chemical substances that are present to a smaller or greater degree according to different factors, such as for example the blend, type of processing and other. Some of these chemical substances present valuable benefits in different types of applications such as the case of the classes of compounds to be used in the synthesis of edible coatings.

Moreover, coffee is an edible products that can be provided in different forms, including roasted ground coffee, available in the form of loose granulate and of compacted pod and used for example in the preparation of espresso type coffee, soluble coffee in the form of soluble granulate, coffee concentrate in the liquid form, and other.

In general, the systems of distribution of coffee require packages, such as for example rigid capsules or flexible pods of single portions, that provide an effective water, humidity and oxygen barrier, so as to ensure the protection/ maintenance of proprieties, aromas and tastes associated with several of said chemical substances, in particular volatile compounds. However, the use of standard package materials, such as for example synthetic materials and aluminium, is associated with multiple economic, environmental costs and, even, quality constrains of the edible product. There is therefore a possibility of creating new systems of edible primary packaging.

Moreover, there are several properties associated with several compounds present in coffee and that provide a better behaviour of certain coffee derivate, such as for example better creme formation in espresso type coffee or better aromatic profile in soluble type coffee. There is therefore a possibility of improving several properties of edible products, such as for example coffee-based aromatic beverages, by means of adding an edible component that presents an appropriate content of such compounds extractable from coffee.

Moreover, there is growing evidence that certain compounds that are present in coffee provide beneficial health effects, whereby said compounds are present in different fractions according to the type of coffee blend or derivate thereof.

Documents WO 2011/123949 and WO 2013/049928 A1 disclose edible coatings for preserving an organoleptic propriety of a food product and that includes a polysaccharide, in particular a polysaccharide selected from the group that comprises carrageenates, gelane, sodium alginate and pectin, and a solution of reticulating agent.

Document WO 2015/097335 A1 discloses an edible coating for the conservation of pieces of fruit and that includes a first polysaccharide aqueous solution and a second aqueous solution that includes a crossing of a calcium agent for the jellification of the polysaccharide in the first aqueous solution.

Document US 2008317931 A1 discloses a capsule for preparation of beverages including two compartments, whereby the wall of a compartment contains a water soluble material, in particular said wall contains a sucrose syrup, glucose syrup, other polysaccharides or mixtures thereof.

Document US 2010303969 A1 discloses dissoluble films impregnated with tobacco, tea, coffee, botanic and tastes for oral products. Said film comprises combining finely divided particles of vegetable material with a first coating material in a liquid medium, mixing a second coating material, inducing the formation of a gel matrix and forming a film from said gel matrix.

Document US 2013056551 A1 discloses an aroma encapsulated so that can be released, in particular gelatine capsules that encapsulate at least one aromatic compound. The gelatine capsules comprise complex coacervate agents formed by gelatine formed by gelatine and anionic hydrocoloid polymer.

The document "Galactomannans use in the development of edible films/ coatings for food applications", M.A. Cerqueira et al., Trends in Food Science & Technology 22 (2011) 662-671, does not disclose the use of certain coffee derivate, in particular of at least one polysaccharide extractable from coffee in the composition of an edible coating.

None of the documents in prior art discloses an edible component that provides an effective barrier for maintaining the main chemical properties associated with coffee, and that besides thereof, enhances certain chemical properties associated to coffee and derivate thereof.

### General description of the invention

The objective of the present invention is to provide an edible component providing additional edible properties to an edible product that further includes an edible portion.

This objective is attained according to the present invention by means of an edible component according to claim 1.

Another objective of the present invention is to provide a system of edible products including an edible component.

This objective is attained according to the present invention by means of a system of edible products according to claim 9, comprising at least one edible substance and at least one edible component.

According to a preferred embodiment, said edible portion is a dose of at least one type of coffee including roasted ground coffee, micronized roasted coffee, soluble coffee and coffee concentrate. According to another preferred embodiment, said edible portion is a dose of a substance precursor of a beverage, such as for example milk, tea, or of another type of edible product.

Another objective of the present invention is to provide a use of said system of edible products.

This objective is attained according to claim 19.

### Description of the Figures

The invention shall now be explained in greater detail based upon the preferred embodiments and in the attached Figures.

The Figures show, in simplified schematic representations:
- Figure 1:: side view of an edible product presenting a first embodiment of an edible component according to the present invention;
- Figure 2:: side-cut view along a cross-section plane of an edible product presenting a second embodiment of an edible component according to the present invention;
- Figure 3:: side-cut view along a cross-section plane of an edible product presenting a third and fourth embodiments of an edible component according to the present invention;
- Figure 4:: side-cut view along a cross-section plane of an embodiment of a system of edible products according to the present invention;
- Figure 5:: side view (on the left-side) and in side-cut along a cross-section plane of an edible product presenting another embodiment of an edible component according to the present invention;
- Figure 6:: side-cut views along a cross-section plane of another embodiment of a system of edible products according to the present invention;
- Figure 7:: side-cut view along a cross-section plane of an embodiment of a system of edible products according to the present invention;
- Figure 8:: side-cut views along a cross-section plane of another embodiment of a system of edible products according to the present invention.

### Detailed description of preferred embodiments of the invention

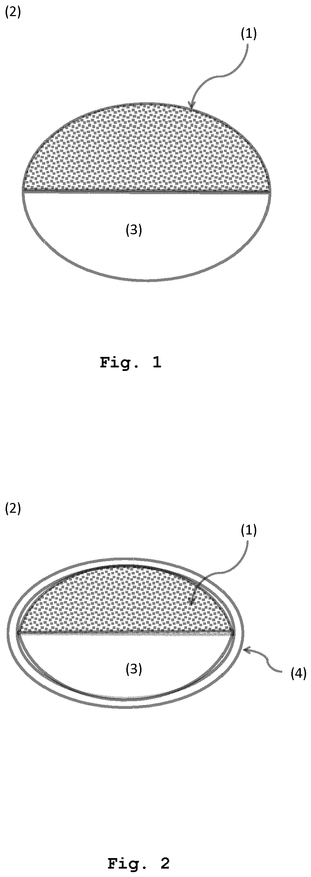

**Figure 1** schematically represents a first embodiment of an edible product (2) that presents an edible coating (1) according to the present invention. For merely illustrative purposes and without constrain of the scope of the present invention, said edible product (2) can be a single the preparation of aromatic beverages, such as for example espresso type coffee, tea, or other beverages. Moreover, said edible portion (3) can be for example of roasted ground coffee, and the edible product (2) can be adapted so that can be used in a beverage preparation machine.

In the case of this embodiment, said edible product (2) comprises an edible portion (3) provided as a half of a global form, in this case in an oval-like shape, and an edible component (1) provided as the other half of said global form and disposed adjacent along part of the exterior surface of said edible portion (3).

According to a first inventive aspect, said edible component (1) includes at least one compound selected from the group that includes polysaccharides and chlorogenic acids extractable from coffee or from a coffee derivate substance.

According to a preferred embodiment, said edible component (1) is adapted so that provides at least one of a passive function, including structural stability and oxygen barrier, and of an active function, including additive substances, notably with particularly recognized health benefits, colouring substances and taste and aroma substances, or other, thereby providing physic-chemical characteristics that are meant to be reinforced or added to said edible product (2).

According to another preferred embodiment, said edible component (1) includes at least one polysaccharide selected from the group that includes galactomannans and arabinogalactans, preferentially at a concentration that is bigger than that at which these compounds are also already present in said edible portion (3), thereby advantageously providing an additional contribute in terms of the beneficial properties associated with these compounds for the final edible product (2).

**Figure 2** represents a view similar to that of Figure 1, whereby the edible product (2) in this case presents a non-edible part (4) provided as exterior envelope and, optionally, adapted so as to provide fluid barrier or other type of passive function.

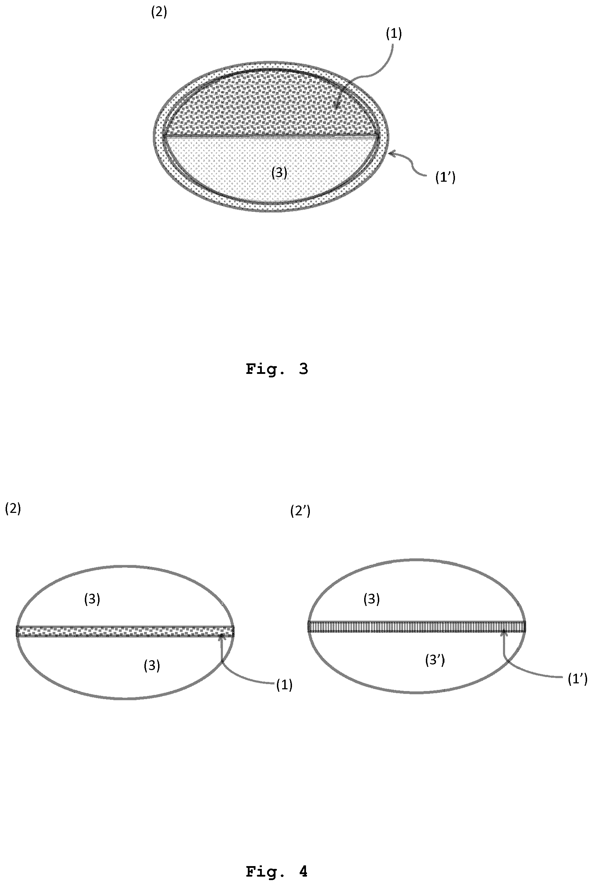

In the case of the edible product (2) represented in **Figure 3****,** said type of functions that can be associated with the exterior envelope is provided by a second edible component (1'), adapted so that presents a composition different from the composition of said first edible component (1).

In particular, the edible component (1) and the edible portion (3) are preferentially of different substances, and confined by said second edible component (1') provided as a wall-like disposition that provides oxygen and water vapour barrier on the exterior surface of the edible product (2).

**Figure 4** presents similar views of two types of edible products (2, 2') included in a system of edible products according to the present invention.

In the case of the represented embodiment, said types of edible products (2, 2'), for example different blends of roasted ground coffee, or different types of soluble coffee, present a similar form and volume, but differ in the composition of respective edible component (1, 1'). For example, in a first case the edible portion (3) is a previously compacted pod of roasted and ground coffee, and in a second case the edible portion (3') is powder of soluble coffee also previously compacted.

In the case of the represented embodiment, the edible component (1, 1') is provided with a circular disc-like shape, interposed between two parts of similar edible portions (3), that is, presenting similar main parameters of chemical composition and physical characteristics, or between two edible portions (3') that are different in at least one of said parameters.

In particular, respective edible components (1, 1') can be adapted so as to provide at least one of different passive and active functions. For example, it can be advantageous to configure the edible component (1) so that it can dissolve when impinged by a fluid flow presenting a different value of flow pressure.

Moreover, it can be advantageous to adapt said edible component (1) s that provides different additional substances, according to the type of substance of the edible portion (3) in a respective type of edible product (2, 2').

According to a preferred embodiment of the present invention, said system of edible products is directly used in a recipient for preparation of edible products, such as for example in a glass or in a bottle, whereby said edible component (1) is in this case preferentially soluble in a flow presenting a flow pressure that is similar to the atmospheric pressure.

According to another preferred embodiment of the present invention, said system of edible products is used for direct ingestion by consumers.

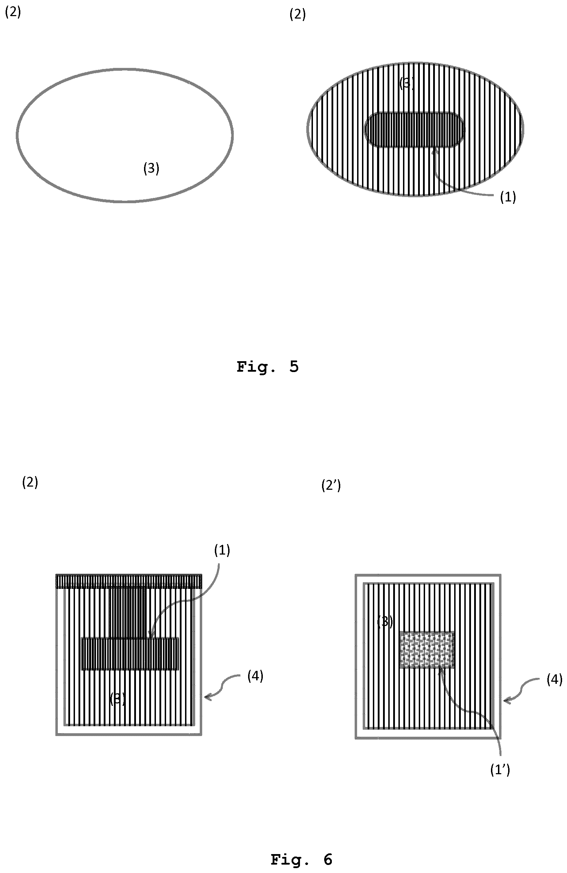

**Figure 5** shows a side view (on the left-side) and a side-cut view of a second embodiment of an edible product (2) in a system of edible products according to the present invention.

In particular, said edible product (2) comprises an edible portion (3) and an edible component (1) provided as nucleus surrounded by said edible portion (3).

**Figure 6** shows another embodiment of a system of edible products according to the present invention, whereby two edible products (2, 2') are represented in side-cut along a cross-section.

A first edible product (2) presents a non-edible part (4), preferentially biodegradable, provided with a general container-like form, for example of circular cylindrical form or similar, that confines an edible portion inside thereof. Moreover, there is further provided an edible component (1) that presents a first part configured as nucleus relative to said edible substance (3), a second part configured as lid of said non-edible part (4), and a third part of connection between the first and second parts of edible component (1).

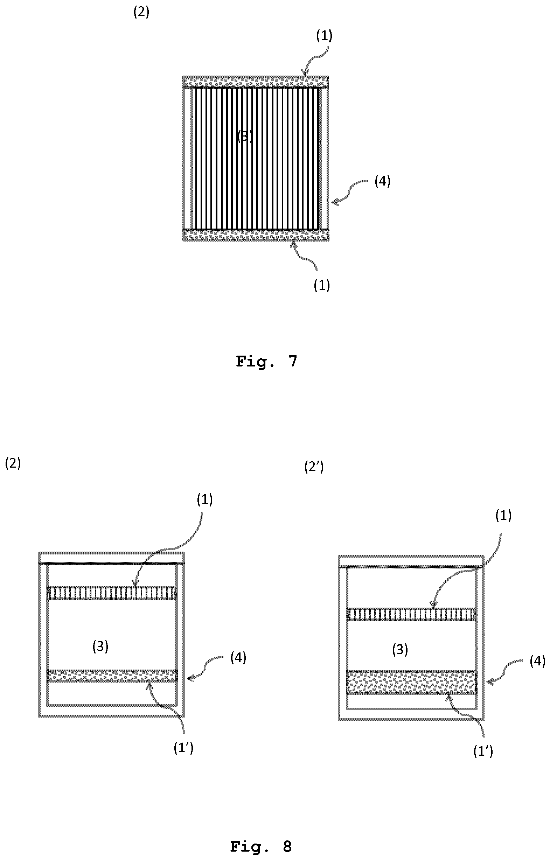

**Figure 7** shows another preferred embodiment of an edible product (2) in a system of edible products according to the present invention.

Said edible product in this case comprises an edible portion (3), for example of coffee concentrate, confined in two opposing tops by respective parts of an edible component (1), and by a sidewall of for example cylindrical form, for example in a synthetic material or in woven or non-woven material, including bio-plastic and bio-composite materials.

According to a preferred embodiment of the present invention, said system of edible products is used in machine for preparing edible products, such as for example machines for preparing beverages by means of extraction or infusion.

**Figure 8** represents another embodiment of a system of edible products that comprises at least two different edible products (2, 2'), in this case provided in the form of single portion capsules, comprising a non-edible part (4) that provides passive functions of oxygen and water vapour barrier confining an edible portion (3), for example of roasted ground coffee beans, and two edible components (1, 1') disposed upstream and downstream of said edible portion (3) along a prevailing flow direction.

According to a preferred embodiment, said first edible component (1) is adapted as a mesh-like disposition, so that provides flow passageways when impinged by a pressurized fluid flow.

According to a preferred embodiment of the present invention, said system of edible products is used in machines for preparing edible products, such as for example in a machine for preparing espresso type coffee or soluble-based coffee, whereby said edible component (1) is in this case preferentially soluble in a flow presenting a flow pressure bigger than atmospheric pressure, preferentially bigger than 2 bar, and at a flow temperature bigger than 60 °C, preferentially bigger than 80 °C.

## Claims

1. **Edible component** (1) of an edible product (2) that further includes an edible portion (3), in particular a portion of a beverage precursor substance, such as for example a portion of roasted ground coffee beans, said edible component **characterized in that** includes at least one of:
- a polysaccharide and
- a chlorogenic acid,
extractable from at least one of a coffee and a coffee derivate, whereby said edible component (1) presents a coherent form provided so that occupies a continuous space on said edible product (2) different from the space occupied by said edible portion (3), whereby said edible portion (3) is preferentially coffee or a coffee derivate substance.

2. Edible component (1) according to claim 1, **characterized in that** presents contents of at least one of a polysaccharide and a chlorogenic acid adapted so that provides at least one of:
- a passive function, including at least one passive function from the group including of structural type and fluid barrier type, in particular including at least one of oxygen and water vapour, and
- an active function, including at least one active function from the group including additive substances, colouring substances, effervescent substances and taste substances, to be added to an edible product.

3. Edible component (1) according to claims 1 or 2, **characterized in that** includes at least one polysaccharide selected from the group of polysaccharides extractable from at least one of coffee and a coffee derivate, preferentially extractable from an espresso type coffee beverage, that includes galactomannans, arabinogalactans, from the group of sugars extractable from coffee or derivate thereof, preferentially from roasted ground coffee beans and respective espresso type coffee beverage, including galactose, mannose, arabinose, rhamnose and glucose, and also from the group of the pectins.

4. Edible component (1) according to claims 1 to 3, **characterized in that** is provided different from said edible portion (3) in at least one of:
- content of substances extractable from coffee or a coffee derivate and selected from the group that includes polysaccharides and chlorogenic acids;
- dimension of the occupied space;
- configuration of the occupied space;
- degree of hardness and type of aggregation of the respective structure.

5. Edible component (1) according to claims 1 to 4, **characterized in that** is provided at least partially inside of said edible portion (3), or is provided in the exterior of at least part of the exterior surface of said edible portion (3), and preferentially upstream and/ or downstream of said edible portion (3) in relation to a prevailing flow direction.

6. Edible component (1) according to claims 1 to 5, **characterized in that** includes at least one polysaccharide extractable from coffee in a proportion of up to 15% of the total solid content in the espresso type coffee beverage that consists of 2g for each 40ml of espresso type coffee beverage, whereby said polysaccharide present a content of low molecular weight polysaccharide material of up to 600 mg for each 40 ml of espresso type coffee beverage.

7. Edible component (1) according to claims 1 to 6, **characterized in that** substantially changes its structure only when exposed to temperature and pressure conditions higher than ambient temperature and pressure, so that its changed structure is not perceptible to a consumer in the resulting edible fluid, preferentially only substantially changes said structure when impinged by a fluid flow presenting at least one of:
- a flow pressure of at least 2 bar, preferentially of at least 10 bar;
- a flow temperature of at least 40 °C, preferentially of at least 60 °C, particularly preferentially between 80 and 92 °C.

8. Edible component (1) according to claims 1 to 7, **characterized in that** includes at least one of the group that includes lipids and waxes, including bee wax, and plasticizing agents including glycerol, and surfactant agents, including Tween 80 and lecithin.

9. **System** of edible products (2, 2') including edible substances, in particular edible substances that are beverage precursors when mixed with a fluid flow, and that comprises:
- at least one edible portion (3) of at least one edible substance,
- at least one edible component (1) associated with said edible portion (3), in particular and edible component (1) according to claims 1 to 8,
**characterized**
**in that** said edible component (1) presents a content of at least one of polysaccharides and chlorogenic acids extractable from coffee or a derivate substance thereof, that is different from the content of polysaccharides and chlorogenic acids of said edible portion (3), whereby said edible portion (3) is preferentially coffee or a coffee derivate substance.

10. System according to claim 9, **characterized in that** said edible component (1) is provided as a wall-like disposition presenting a thickness smaller than 5 mm, preferentially smaller than 3 mm or of solid type presenting a dimensional aspect ration smaller than 3:1, preferentially smaller than 2:1.

11. System according to claims 9 or 10, **characterized in that** said edible component (1) is adapted as an envelope type disposition over at least part of the exterior surface of said edible portion (3), so that provides an oxygen barrier in said portion of exterior surface.

12. System according to claims 9 to 11, **characterized in that** said edible component (1) is provided as a nucleus type disposition, at least partially in the interior of said edible portion (3).

13. System according to claims 9 to 12, **characterized in that** said edible component (1) is adapted as a mesh-like, filter or similar disposition, over at least part of the exterior surface of said edible portion (3), so that provides flow passageways and/or restrictions to the flow passage when impinged by a pressurized fluid flow.

14. System according to claims 9 to 13, **characterized in that** said edible portion (3) is provided in a compacted disposition, such as for example compacted pod or similar.

15. System according to claims 9 to 14, **characterized in that** includes two edible portions (3, 3') at least partially separated and/or surrounded by an edible component (1).

16. System according to claims 9 to 15, **characterized in that** includes at least two different types of edible products (2, 2'), presenting at least one of edible component (1, 1') and edible portion (3, 3') that are different in at least one of composition, quantity, physical state, physical dimension and general configuration.

17. System according to claims 9 to 16, **characterized in that** said types of edible products (2, 2') present edible components (1, 1') with different compositions, so that provide at least one of different active properties and different passive properties and, optionally, at least one non-edible part (4), preferentially biodegradable.

18. System according to claims 9 to 17, **characterized in that** further comprises at least one type of machine for preparing edible products (2, 2'), adapted so that can process said at least one type of edible products (2, 2').

19. **Use** of a system of edible products (2, 2') comprising at least one edible component (1) including at least one substance extractable from coffee or a derivate thereof, in particular of a system of edible products (2, 2') according to any one of previous claims 9 a 18, **characterized in that** said edible products (2, 2') are adapted so that can be distributed for final consumption in at least one of a substantially solid, liquid or gel form.

20. Use according to claim 19, **characterized in that** said edible products (2, 2') are adapted so that can be used in at least one of:
- recipients for the preparation of edible products, such as for example glasses, bottles and similar;
- machines for the preparation of edible products, such as for example machines for the preparation of beverages;
- direct ingestion by consumers.
